(19) Europäisches Patentamt
European Patent Office
Office européen des brevets

(11) **EP 0 751 102 B1**

(12) **FASCICULE DE BREVET EUROPEEN**

(45) Date de publication et mention
de la délivrance du brevet:
**11.12.2002 Bulletin 2002/50**

(51) Int Cl.7: **C04B 28/02**, C09K 17/10

(21) Numéro de dépôt: **96401397.3**

(22) Date de dépôt: **25.06.1996**

(54) **Liant hydraulique pour le traitement des sols ou matériaux argileux**

Hydraulisches Bindemittel für die Behandlung von Böden oder tonhaltigen Materialien

Hydraulic binder for the treatment of earth or clavey materials

(84) Etats contractants désignés:
**AT BE CH DE DK ES GB LI LU NL SE**

(30) Priorité: **29.06.1995 FR 9507824**

(43) Date de publication de la demande:
**02.01.1997 Bulletin 1997/01**

(73) Titulaire: **Holcim (France)**
**75116 Paris (FR)**

(72) Inventeurs:
• **Vecoven, Jacques H.**
**02100 Saint-Quentin (FR)**
• **Musikas, Nicolas**
**02420 Levergies (FR)**
• **Haag, Emmanuel R.**
**02390 Origny Ste-Benoite (FR)**

(74) Mandataire: **Fruchard, Guy et al**
**CABINET BOETTCHER,**
**22, rue du Général Foy**
**75008 Paris (FR)**

(56) Documents cités:
**EP-A- 0 188 618      DE-A- 2 622 086**
**FR-A- 2 436 758      FR-A- 2 655 975**
**GB-A- 546 629        JP-A- 1 290 543**
**JP-A- 1 299 913       JP-A- 57 200 252**

• **PATENT ABSTRACTS OF JAPAN vol. 012, no. 353 (C-530), 21 Septembre 1988 & JP-A-63 108093 (NIPPON JIRYOKU SENKO KK;OTHERS: 01), 12 Mai 1988,**
• **DATABASE WPI Section Ch, Week 9309 Derwent Publications Ltd., London, GB; Class L02, AN 93-071352 XP002013031 & JP-A-05 017 771 ( CHICHIBU CEMENT KK) , 26 Janvier 1993**
• **DATABASE WPI Section Ch, Week 9001 Derwent Publications Ltd., London, GB; Class L02, AN 90-005317 XP002013032 & JP-A-01 289 890 ( CHICHIBU CEMENT KK) , 21 Novembre 1989**
• **DATABASE WPI Section Ch, Week 9410 Derwent Publications Ltd., London, GB; Class L02, AN 94-080181 XP002013033 & JP-A-06 033 057 ( UBE IND LTD) , 8 Février 1994**

**Description**

La présente invention concerne un liant hydraulique utilisé notamment pour le traitement des sols et matériaux contenant de l'argile tels que limons, sables et sablons argileux, graves argileuses, produits de scalpage, anciennes chaussées, etc....

Les terrains argileux sont sensibles à l'eau et sont non portants, lorsqu'ils sont gorgés d'eau. Lorsque les chantiers, tels que les chantiers de constructions routières, par exemple, sont situés sur des terrains argileux, il faut, d'une part, permettre l'accès aux engins de chantier qui doivent nécessairement y circuler pendant la durée des travaux, et d'autre part, pouvoir utiliser sur place le matériau du terrain, en tant qu'assise de chaussée, par souci d'économie et de protection de l'environnement.

Pour cela, il est nécessaire de conférer rapidement aux sols argileux une cohésion suffisante.

Il a été démontré que l'on obtient cette cohésion en prétraitant les sols argileux avec de la chaux, afin de pouvoir leur incorporer ensuite du ciment de façon correcte.

Le ciment seul, en effet, se mélange mal ou très mal aux sols argileux détrempés, même après un malaxage puissant. En effet, en l'absence d'un prétraitement à la chaux, les sols argileux forment au cours du malaxage de grosses boules qui restent "farinées" par la poudre de ciment. Or, pour que le sol traité au ciment ait une résistance suffisante et les qualités requises, il est nécessaire de réaliser un mélange intime entre le sol et le ciment. Ceci ne peut être obtenu qu'en divisant suffisamment le sol. C'est pourquoi dans les techniques actuelles de traitement des sols argileux au ciment, on prétraite préalablement ces sols à la chaux.

Le traitement d'un sol argileux se décompose ainsi en trois phases:

- on épand de la chaux sur le sol de façon à faciliter le passage des engins, on malaxe par un engin malaxeur et on laisse agir pendant 2 à 72 heures après avoir nivelé et quelque fois compacté la plate-forme ;
- on épand une première quantité de ciment puis on malaxe ;
- on épand une deuxième quantité de ciment, on malaxe, on nivelle et on compacte.

Après l'épandage et le malaxage de la chaux, le sol est laissé au repos pendant une période qui peut varier de deux heures à quelques jours pour que le produit réagisse.

La chaux vive a la faculté de se placer entre les feuillets d'argiles et de réagir avec une partie de l'eau présente dans le sol pour donner de la chaux éteinte avec dégagement de chaleur, ce qui entraîne une évaporation d'eau.

La chaux permet donc, d'une part, de diminuer un peu la teneur en eau du sol, et, d'autre part, de réarranger les feuillets d'argile, ce qui permet au sol de supporter une plus grande teneur en eau avant saturation du milieu. Les deux effets cumulés conduisent à l'obtention d'un sol modifié moins sensible à l'eau et plus portant.

L'action de la chaux est rapide, même si le sol est très humide. Un sol très collant et non portant sera rapidement transformé en petites boulettes faciles à travailler et ayant des capacités portantes supérieures.

En général, un faible dosage en chaux, de l'ordre de 1% du poids du sol malaxé permet de déclencher ces modifications.

L'homogénéité acquise par le sol argileux après le prétraitement à la chaux, le place alors dans des conditions idéales pour subir un traitement au ciment.

Le traitement au ciment du sol argileux prétraité à la chaux se fait ensuite, comme s'il s'agissait de traiter au ciment un sol non argileux.

Les réactions du ciment avec le sol argileux préalablement traité à la chaux, consistent essentiellement en une hydratation des silicates et aluminates de calcium anhydres et en une cristallisation des produits hydratés : C'est la prise hydraulique qui conduit rapidement au durcissement du mélange, à l'obtention de caractéristiques mécaniques élevées et à sa stabilité à l'eau et au gel.

Ce mode de traitement traditionnel des sols argileux nécessite le stockage de deux liants totalement différents avec des risques de confusion, et un temps de traitement relativement long. Il entraîne des coûts économiques importants, du fait des frais de stockage de deux liants, et des coûts d'immobilisation des engins pendant le temps d'agissement de la chaux.

L'état de la technique sur le traitement des sols argileux est illustré par la documentation technique - CIM béton (Centre d'Information sur le ciment et ses applications) -intitulée "L.T.C.C. Les limons traités à la chaux et au ciment pour assises de chaussée à faible trafic", "Extrait de ROUTES n° 44 - Février 1993".

Dans ce document, il est spécifié au chapitre "conditions de mise en oeuvre" qu'il est illusoire d'espérer gagner du temps et de la production en supprimant le prétraitement à la chaux ou en réunissant les deux liants".

Il est connu du document JP-A-5 007 771 d'utiliser un agent solidifiant comportant de clinker de ciment Portland, de clinker contenant principalement du sulfoaluminate de calcium, d'anhydrite ou de gypse, de chaux vive ou éteinte et de carbonate alcalin utilisé comme accélérateur pour solidifier de sols faibles.

La Demanderesse a découvert un liant unique constitué d'un mélange tertiaire et d'une façon encore plus avantageuse quaternaire, qui, contrairement aux idées admises jusqu'à présent, réunit les propriétés nécessaires à l'obtention d'un sol argileux correctement traité avec une suite d'opérations plus simple, plus rapide et moins coûteuse.

Selon l'invention, le liant hydraulique proposé est constitué d'un mélange de clinker de ciment exempt de sulfoaluminate de calcium dans la proportion de 40 à 80% en poids, de chaux vive ou éteinte dans la proportion de 15 à 25% en poids et de composé de sulfate de calcium, gypse ou anhydre dans la proportion de 3 à 12 % en poids.

D'une façon avantageuse, le mélange comporte en outre du laitier de haut fourneau moulu dans une proportion au plus égale à 25% en poids.

La part de chaux est présente dans le mélange sous forme de chaux vive ou de chaux éteinte, de chaux grasse ou de chaux hydraulique. De préférence, le teneur en CaO du liant est comprise entre 9 et 25 % en poids.

Le composé sulfatique est introduit dans le mélange sous forme de gypse ou d'anhydre, ou d'une combinaison de gypse et d'anhydre, ou de sulfate de calcium artificiel. La teneur en $SO_3$ du liant est de préférence comprise entre 1 et 12% en poids.

L'invention concerne également l'utilisation du liant pour le traitement des sols et matériaux contenant de l'argile, tels que limons, sables et sablons argileux, graves argileuses, et, d'une façon générale, pour traiter les produits pollués d'argile et destinés à la construction d'ouvrages.

Le liant proposé permet un gain de temps dans le traitement des sols argileux, car il supprime les phases d'épandage de chaux de l'art antérieur et surtout le temps de repos après le malaxage du sol prétraité à la chaux qui était nécessaire pour permettre l'action de la chaux.

Il permet également un gain économique, car il n'y a plus qu'un seul liant sur le chantier d'où moins de frais de stockage, d'autre part, la durée d'immobilisation des engins est limitée.

Le traitement des sols argileux par le liant proposé permet d'améliorer la portance immédiate des sols par action sur les particules argileuses, ceci facilite la circulation des engins.

A long terme, le liant proposé donne au matériau traité des performances qui autorisent des constructions importantes et durables. Le sol traité ne se déforme pas lors des variations climatiques et ne s'altère pas sous l'action des intempéries par gonflement dû à l'eau ou par éclatement dû au gel.

Pour illustrer les qualités du liant proposé, la Demanderesse a réalisé une série d'essais comparatifs avec des compositions conformes à l'invention.

Pour ces essais on a utilisé un limon argileux ayant les propriétés suivantes :

- indice de plasticité : 15
- % de fines inférieures à 80 microns : 84%
- valeur de bleu VBS: 1,7g pour 100g de sol.

Pour bien mettre en évidence l'apport de l'invention, on a réalisé la série des essais suivants avec plusieurs produits :

- appréciation visuelle de l'homogénéité du mélange,
- analyse granulométrique de la finesse du sol traité, après malaxage et sans compactage,
- essai Proctor normal pour définir la densité et la teneur en eau de travail suivant la norme NF P 94-093,
- essai de portance immédiate suivant la norme NF 94-078, avec une teneur en eau à l'Optimum Proctor Normal (Wopm) de 4% par rapport au sol seul,
- moulage d'éprouvettes de 5cm de diamètre et 10cm de hauteur, compactées aux conditions de l'Optimum Proctor Normal (OPN) et écrasement en compression aux échéances suivantes : 12 heures, 1, 4 et 12 semaines,
- épreuve de gel à 12 semaines (5 cycles de gel-dégel, gel à -10°C pendant 6 heures et dégel à + 10°C pendant 18 heures) suivie d'un écrasement en compression après les 5 cycles.

Comme solution de référence, on a pris le traitement classique recommandé par l'administration française pour réaliser des sols traités de qualité, ce traitement consistant en un prétraitement avec 1,5% de chaux et un traitement au ciment normalisé de type CLK 45 dans la proportion de 5%. Cette solution est dénommée "Témoin" ci-après.

On a testé le sol ayant subi un traitement direct par un mélange, sous forme d'une poudre unique des deux liants de la solution Témoin, ce mélange étant dénommé Liant 1 ci-après.

On a traité le sol par quatre mélanges conformes à l'invention, dénommés Liant 2 à Liant 5 ci-après.

Enfin, on a également testé le sol simplement mélangé avec 6,5% de fines calcaires broyées pour simuler l'action de l'incorporation d'un pulvérulent sec. Ce mélange est dénommé "Filler" ci-après.

A l'issue des épreuves on a noté les produits en attribuant la note 0 au plus mauvais résultat et la note 20 au meilleur résultat et ceci pour chaque essai.

Les résultats obtenus sont rassemblés sur le tableau A avec les valeurs obtenues et les notes.

Le composition des liants testés et la méthode de mise en oeuvre sont fournies ci-dessous.

**Témoin :** Traitement classique en trois passes

- une passe de 1,5 % de CaO - malaxage - attente 2 heures
- une passe de 2,5 % de CLK 45 - malaxage - attente 15 minutes
- une passe de 2,5 % de CLK 45 - malaxage à t = 0 - L'échantillon de sol traité est prêt pour les essais.

Il est rappelé que le ciment CLK 45 comporte 20% en poids de clinker, 75% en poids de laitier de haut fourneau et 5% en poids de gypse.

**Liant 1 :** Mélange intime préalable de 1,5 parties de chaux et de 5 parties de CLK 45

- mise en oeuvre en deux passes
- une passe de 3,25 % du mélange de pulvérulents - malaxage - attente 15 minutes
- une passe de 3,25 % du mélange - malaxage à t = 0 : l'échantillon de sol traité est prêt pour les essais.

**Liant 2 :** Liant composé de 80% de clinker - 15 % de chaux vive - 5% d'anhydrite. Produit mis en oeuvre en deux passes de 3,25 % par la même méthode que pour le liant 1.

**Liant 3 :** Liant composé de 57% de clinker - 19 % de chaux vive - 5% d'anhydrite - 19% de laitier de haut fourneau. Produit mis en oeuvre en deux passes de 3,25 % par la même méthode que pour le liant 1.

**Liant 4 :** Liant composé de 53% de clinker - 20 % de chaux - 5% d'anhydrite - 22 % de laitier de haut fourneau. Produit mis en oeuvre en deux passes de 3,25 % par la même méthode que pour le liant 1.

**Liant 5 :** Liant composé de 52% de clinker -18 % de chaux - 12% d'anhydrite - 18 % de laitier de haut fourneau. Produit mis en oeuvre en deux passes de 3,25 % par la même méthode que pour le liant 1.

**Filler :** Addition de 6,5 % de filler calcaire additionné en deux passes de 3,25 % suivant la même méthode que pour le liant 1.

Le lexique des significations des sigles employés en tête de colonne du tableau A est donné ci-après :

R 6, 3 =     refus du sol tamisé à 6,3 mm après le traitement
R 4 =     idem refus au tamis de 4 mm
R2 =     idem refus du tamis de 2 mm
DISP     dispersion apprécié

B =     Bonne
M =     Moyenne
I =     Insuffisante

DSopn =     Densité sèche mesurée à l'optimum Proctor Normal
Wopn =     Teneur en eau à l'OPN.
T°C =     élévation de température du sol mesurée juste après le traitement.
IPI 22=     valeur de l'Indice Portant Immédiat pour une teneur en eau du sol de 22 ppc soit Wopn du sol seul + 4 ppc
Rcs12=     Résistance à la compression simple mesurée à 12 heures
Rcs 7 j =     Résistance à la compression mesurée à 7 jours
Rcs 28 =     Résistance à la compression mesurée à 28 jours
Rcs 90 =     Résistance à la compression mesurée à 90 jours
G =     indice de gel = $\dfrac{\text{Rcs 90 après gel}}{\text{Rcs 90 avant gel}}$
PTS =     Points obtenus par chaque paramètre
TOT =     Points pour chaque catégorie de paramètres
Note générale =     note globale affectée à chaque liant.

Les paramètres mesurés sont regroupés en cinq catégories :

- l'aptitude du mélange et la finesse,
- la floculation,
- la portance et la traficabilité,

- les performances mécaniques,
- la tenue au gel.

On peut voir que les liants (Liant 2 à Liant 5) conformes à l'invention sont tous supérieurs à la solution de référence (Témoin) pour traiter les sols, qu'il s'agisse de l'action immédiate de portance, des performances mécaniques obtenus à terme, ou de la résistance aux agression du gel après durcissement complet du sol traité.

On peut aussi vérifier que l'opération de traitement du sol suivant l'invention est très simplifiée dans sa mise en oeuvre, avec moins de risques d'erreurs, qu'elle est plus rapide et plus efficace que tous les produits actuellement connus.

TABLEAU A

| NOMS | APTITUDE MELANGE ET FINESSE | | | | | | | FLOCULATION | | | | | | | PORTANCE-TRAFICABILITE | | | | | | PERFORMANCES MECANIQUES | | | | | | | TENUE AU GEL | | | | |
|---|---|---|---|---|---|---|---|---|---|---|---|---|---|---|---|---|---|---|---|---|---|---|---|---|---|---|---|---|---|---|---|---|
| | R6,3 | R 4 | R 2 | PTS | DISP | PTS | TOT1 | DSopn | PTS | Wopn | PTS | T°C | PTS | TOT2 | IPI22 | PTS | Rcs12 | PTS | TOT3 | Rcs7j | PTS | Rcs28 | PTS | Rcs90 | PTS | TOT4 | Rcs90 | PTS | G | PTS | TOT5 |
| TEMOIN | 2 | 17 | 55 | 20,0 | B | 20 | 20,0 | 1,62 | 13,8 | 22,5 | 20,0 | 3 | 6 | 13,0 | 18 | 12,5 | 0,55 | 9,9 | 11,2 | 1,03 | 7,9 | 1,28 | 7,4 | 1,89 | 9,8 | 8,4 | 0,72 | 3,9 | 0,38 | 4,3 | 4,1 |
| LIANT 1 | | | 61 | 13,7 | B | 16 | 14,8 | 1,64 | 10,8 | 20,5 | 12,0 | 3 | 6 | 9,0 | 16 | 10,8 | 0,42 | 6,1 | 8,5 | 1,01 | 7,7 | 1,36 | 8,1 | 1,62 | 8,0 | 7,9 | 0,89 | 5,0 | 0,55 | 8,8 | 6,9 |
| LIANT 2 | 7 | 27 | 62 | 12,6 | M | 10 | 11,3 | 1,62 | 13,8 | 22,0 | 18,0 | 4 | 8 | 13,0 | 25 | 18,3 | 0,80 | 17,1 | 17,7 | 1,96 | 18,2 | 2,11 | 14,4 | 2,99 | 17,4 | 16,7 | 2,41 | 14,6 | 0,80 | 15,5 | 15,0 |
| LIANT 3 | 11 | 27 | 62 | 12,6 | M | 12 | 12,3 | 1,68 | 4,6 | 20,7 | 12,8 | 5 | 10 | 11,4 | 20 | 14,2 | 0,80 | 17,1 | 15,6 | 1,45 | 12,6 | 2,29 | 15,9 | 3,36 | 19,9 | 16,1 | 3,26 | 20,0 | 0,97 | 20,0 | 20,0 |
| LIANT 4 | 10 | 27 | 61 | 13,7 | M | 14 | 13,8 | 1,62 | 13,8 | 21,0 | 14,0 | , 4 | 8 | 11,0 | 27 | 20,0 | 0,60 | 11,3 | 15,7 | 1,42 | 12,2 | 2,13 | 14,6 | 3,26 | 19,2 | 15,3 | 2,82 | 17,2 | 0,86 | 17,1 | 17,1 |
| LIANT 5 | 9 | 26 | 62 | 12,6 | B | 16 | 14,3 | 1,66 | 7,7 | 20,2 | 10,8 | 4 | 8 | 9,4 | 21 | 15,0 | 0,90 | 20,0 | 17,5 | 2,12 | 20,0 | 2,78 | 20,0 | 3,26 | 19,2 | 19,7 | 1,27 | 7,4 | 0,39 | 4,5 | 6,0 |
| FILLER | | | | | I | 5 | 5,0 | 1,71 | 0,0 | 17,5 | 0,0 | | | 0,0 | 3 | 0,0 | | | | | | | | | | | | | | | |

EP 0 751 102 B1

### Revendications

**1.** Liant hydraulique pour traiter des sols et matériaux contenant de l'argile, tels que les limons, sables et sablons argileux, graves argileuses, produits de scalpage, anciennes chaussées, **caractérisé par le fait qu'**il est constitué de clinker de ciment Portland, exempt de sulfoaluminate de calcium, dans la proportion de 40 à 80% en poids, de chaux vive ou éteinte dans la proportion de 15 à 25% en poids, et de composé de sulfate de calcium, gypse ou anhydrite dans la proportion de 3 à 12% en poids, et qui possiblement comporte en outre du laitier de haut fourneau moulu dans une proportion au plus égale à 25% en poids.

**2.** Liant hydraulique selon la revendication 1, **caractérisé par le fait qu'**il comporte en outre du laitier de haut fourneau moulu dans une proportion au plus égale à 25% en poids.

**3.** Liant hydraulique selon l'une des revendications 1 ou 2, **caractérisé par le fait que** la part de chaux est présente sous forme de chaux vive ou éteinte, de chaux grasse ou de chaux hydraulique, la teneur en CaO étant comprise entre 9 et 25% en poids.

**4.** Liant hydraulique selon l'une quelconque des revendications 1 à 3, **caractérisé par le fait que** le composé sulfatique est introduit dans le mélange sous forme de gypse ou anhydrite, ou d'une combinaison des deux ou de sulfate de calcium artificiel et **par le fait que** la teneur en $SO_3$ du liant est de préférence comprise entre 1 et 12% en poids.

**5.** Procédé pour traiter des sols et matériaux contenant de l'argile, tels que les limons, sables et sablons argileux, graves argileuses, produits de scalpage, anciennes chaussées, **caractérisé par le fait qu'**on utilise uniquement un liant hydraulique selon l'une quelconque des revendications 1 à 4.

### Patentansprüche

**1.** Hydraulisches Bindemittel für die Behandlung von Böden und tonhaltigen Materialien, wie beispielsweise Schlick, Sänden und tonhaltigen Feinsänden, tonhaltigem Kies, gesiebtem Material, alten Fahrwegen, **dadurch gekennzeichnet, daß** das Bindemittel aus Portlandzement Klinker besteht, der frei ist von Calcium-Sulfoaluminat, in einem Verhältnis von 40 bis 80% des Gewichts, ungelöschtem oder gelöschtem Kalk in einem Verhältnis von 15 bis 25% des Gewichts sowie aus einer Zusammensetzung aus Calciumsulfat, Gips oder Anhydrit in einem Verhältnis von 3 bis 12% des Gewichts, wobei das Bindemittel ferner möglicherweise gemahlene Hochofenschlacke in einem Verhältnis von höchstens 25% des Gewichts enthält.

**2.** Hydraulisches Bindemittel nach Anspruch 1, **dadurch gekennzeichnet, daß** es ferner gemahlene Hochofenschlacke in einem Verhältnis von höchstens 25% des Gewichts enthält.

**3.** Hydraulisches Bindemittel nach einem der Ansprüche 1 oder 2, **dadurch gekennzeichnet, daß** der Kalkanteil als ungelöschter oder gelöschter Kalk, Weißkalk oder Hydraulikkalk vorliegt, wobei der CaO-Gehalt zwischen 9 und 25% des Gewichts liegt.

**4.** Hydraulisches Bindemittel nach einem der Ansprüche 1 bis 3 **dadurch gekennzeichnet, daß** die Sulfatzusammensetzung in die Mischung in Form von Gips oder Anhydrit oder einer Kombination aus diesen beiden oder aus künstlichem Calciumsulfat gegeben wird und dadurch, daß der $SO_3$-Gehalt des Bindemittels vorzugsweise zwischen 1 und 12% des Gewichts beträgt.

**5.** Verfahren zur Behandlung von Böden und tonhaltigen Materialien, wie beispielsweise Schlick, Sänden und tonhaltigen Feinsänden, tonhaltigem Kies, gesiebtem Material, alten Fahrwegen, **dadurch gekennzeichnet, daß** ausschließlich ein hydraulisches Bindemittel nach einem der Ansprüche 1 bis 4 eingesetzt wird.

### Claims

**1.** A hydraulic binder for treating soils and materials containing clay, such as loam, clayey sand, clayey gravel, scrapings, old roadways, the binder being **characterized by** the fact that it is constituted by 40% to 80% by weight Portland cement clinker free from calcium sulfoaluminate, 15% to 25% by weight quick or slaked lime, and 3% to 12% by weight of anhydride, gypsum, or calcium sulfate compound, and which optionally further comprises no more than 25% by weight molded blast furnace slag.

2. A hydraulic binder according to claim 1, **characterized in** the fact that it further comprises no more than 25% by weight of molded blast furnace slag.

3. A hydraulic binder according to claim 1 or claim 2, **characterized by** the fact that the lime content is present in the form of quick or slaked lime, fat lime or hydraulic lime, the CaO content lying in the range 9% to 25% by weight.

4. A hydraulic binder according to any one of claims 1 to 3, **characterized by** the fact that the sulfate compound is introduced into the mixture in the form of anhydride or gypsum, or in the form of a combination of both of them, or in the form of artificial calcium sulfate, and by the fact that the $SO_3$ content of the binder lies preferably in the range 1% to 12% by weight.

5. A method of treating soils and materials containing clay, such as loams, clayey sands and fine sands, clayey gravel, scrapings, old roadways, **characterized by** the fact that use is made solely of a hydraulic binder according to any one of claims 1 to 4.